# EUROPÄISCHE PATENTSCHRIFT

(11) **EP 1 676 750 B1**
(45) Veröffentlichungstag und Bekanntmachung des Hinweises auf die Patenterteilung: **18.06.2008**
(21) Anmeldenummer: 05000011.6
(22) Anmeldetag: 03.01.2005
(51) Int. Cl.: B60R 11/02

(54) **Mechanismus für Mobiltelefon/PDA-Halter mit verstellbaren Klemmbacken**
Mechanism for a Mobilephone/PDA support with adjustable jaws
Mécanisme pour support de téléphone/ANP à machoîres réglables

(43) Veröffentlichungstag der Anmeldung: 05.07.2006
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- DE-A1- 19 830 270
- DE-C1- 19 621 014
- US-A- 5 788 202

## Beschreibung

Die Erfindung betrifft einen die Verstellbarkeit, Arretierung und Lösbarkeit der Klemmbacken bewirkenden Mechanismus eines Mobiltelefon/PDA-Halters mit verstellbaren Klemmbacken.

Ein solcher Mechanismus ist aus dem deutschen Patent DE 195 42 720 bekannt. Dieses Patent beschreibt und zeigt einen Mobiltelefon/PDA-Halter mit einem Grundkörper, auf den das Mobiltelefon, der PDA oder ein ähnliches Gerät wie beispielsweise ein mobiles Navigationsgerät aufgelegt werden kann, und mit zwei am Grundkörper angeordneten beiderseitigen Klemmbacken, die über einen im Grundkörper untergebrachten Mechanismus synchron seitwärts zueinander hin oder voneinander weg bewegbar sind, um das gehaltene Gerät beiderseits klemmend festzuhalten. Der Mechanismus ermöglicht dabei das Öffnen der Klemmbacken, das synchrone Schließen der Klemmbacken, und das selbsttätige Arretieren in der jeweiligen Schließposition.

Bei dem bekannten Halter sind die beiden Klemmbacken für eine synchrone Bewegung durch eine Kuppelmechanik verbunden, die eine um eine Hochachse drehbare Scheibe mit zwei diametral gegenüberliegenden Langlöchern aufweist. In jedes Langloch greift ein Zapfen ein, der an einem in den Grundkörper eintauchenden Führungsschenkel der einen bzw. der anderen der beiden Klemmbacken angeordnet ist. Eine Verschiebung der Backen in Richtung zueinander hin oder voneinander weg erfolgt daher stets synchron und gleichmäßig, weil die beiden Klemmbacken über ihre Zapfen und das diese in seinen radialen Langlöchern aufnehmende drehbare Rad miteinander gekuppelt sind. Eine Druckfederanordnung zwischen dem Grundkörper und den Backen spannt die Backen in ihrer Öffnungsstellung vor.

Der bekannte Mechanismus enthält weiter ein mit dem Rad des Kuppelmechanismus drehfest verbundenes Zahnrad, in das eine Rastklinke eingreift. Die Rastklinke ist an einem Schieber angeordnet, dessen freies Ende als aus dem Grundkörper herausragende Auslösetaste ausgebildet und der mittels einer Feder in Richtung der Eingriffsstellung der Rast-klinke mit dem Zahnrad vorgespannt ist. Die Rastklinge bildet somit zusammen mit dem Zahnrad einen Ratschenmechanismus. Bei Betätigung des Auslösetasters wird die Klinke aus dem Zahnrad herausgedrückt, so daß die beiden Klemmbacken unter der Vorspannkraft der ihnen zugeordneten Federanordnung synchron voneinander weg in ihre äußerste Öffnungsstellung bewegt werden. Nach dem Einlegen eines Geräts in den Halter werden die Backen manuell zueinander hin zusammengedrückt, wobei das Zahnrad über die in ihre Eingriffsstellung vorgespannte Rastklinke ratscht, weil die Zähne des Zahnrads so ausgebildet sind, daß sie eine solche Ratschbewegung beim Schließen der Klemmbacken ermöglichen, jedoch eine Drehung des Zahnrads in die der Öffnungsbewegung der Backen entsprechende Gegenrichtung durch die Rastklinke gesperrt wird. Ein Lösen der Klemmbacken erfolgt also nur, wenn die Auslösetaste gedrückt und dadurch die Rastklinke aus der Eingriffsposition mit dem Zahnrad herausbewegt wird.

Da die Zähne bei dem bekannten Mechanismus notwendigerweise eine bestimmte Breite in Umfangsrichtung des Zahnrads haben müssen, erfolgt die Schließbewegung der Backen quasi stufen- oder schrittweise, indem das Schließen der Klemmbacken mit jedem Ratschen eines Zahns des Zahnrads über die Rastklinke um einen Schritt fortschreitet. Dementsprechend haben auch die aufeinanderfolgenden, enger werdenden Schließpositionen der Klemmbacken einen gewissen, jeweils einem solchen Ratschenschritt entsprechenden Abstand voneinander, ohne daß Zwischenstellungen möglich wären. Da also der Abstand zwischen den Klemmbacken nur schrittweise verändert werden kann, müssen zum Ausgleich die Klemmbacken an ihren Innenseiten mit einem relativ dicken federnden Polster versehen sein, damit ein eingelegtes Gerät immer sicher ergriffen werden kann. Außerdem erzeugt bei dem bekannten Mechanismus das Schließen der Backen wegen der Ratschenfunktion des Zahnrads und der damit zusammenwirkenden Rastklinke ein entsprechendes ratschendes Geräusch.

Aufgabe der Erfindung ist es, den Mechanismus für einen Mobiltelefon/PDA-Halter mit verstellbaren Klemmbacken dahingehend zu verbessern, dass die Schließbewegung der Klemmbacken und die Arretierung der Klemmbacken in der jeweiligen Schließposition zum einen stufenlos und zum anderen Geräuschlos erfolgt.

Aus dem US-Patent US 5 788 202 ist außer dem beschriebenen, aus der DE 195 42 720 C1 bekannten Ratschenmechanismus auch noch ein alternativer Mechanismus bekannt, der statt eines Zahnrads ein Reibrad, dessen Umfang gummibeschichtet ist, und statt der Rastklinke zwei diametral gegenüberliegend angeordnete Reibkeile aufweist, die reibschlüssig mit dem Reibrad zusammenwirken. Jedoch hat sich in der Praxis herausgestellt, daß diese Anordnung nicht wirklich praxistauglich ist. Denn bei starken Temperaturänderungen, wie sie gerade beim Einsatz solcher Halter in Fahrzeugen beim Aufheizen des Fahrzeuginneren bei Sonneneinstrahlung auftreten, trat häufig ein ungewolltes Lösen der Klemmbacken und deren Bewegung in die vollständig geöffnete Stellung auf.

Die Erfindung bezweckt demgegenüber, eine wirklich praxistaugliche und zuverlässig funktionierende Anordnung zu schaffen, welche Stufenlosigkeit mit Geräuschlosigkeit verbindet.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Erfindungsgemäß ist also an Stelle des bei dem bekannten Mechanismus vorhandenen Zahnrads ein Rad oder Radsegment vorgesehen, dessen Umfang durch ein im wesentlichen elastisches Element gebildet ist, und anstelle einer Rastklinke bei dem bekannten Mechanismus ist erfindungsgemäß eine segmentförmige Arretierbacke vorgesehen, die mindestens einen widerhakenartigen Zahn aufweist, das sich in das elastische Umfangselement des Rads eingräbt und das Rad arretiert, jedoch eine Drehung des Rads in Schließrichtung der Backen zulässt. Im Gegensatz zu den bekannten Ratschenmechanismus ist der Betrieb dieses Mechanismus stufenlos und geräuschlos. Er funktioniert auch zuverlässig, und insbesondere unabhängig auch von starken Temperaturschwankungen.

Die Erfindung wird nachstehend unter Bezugnahme auf die anliegende Zeichnungen mehr im einzelnen beschrieben, in denen zeigt:
- Fig. 1: eine Untersicht eines Mobiltelefon/PDA-Halters mit einem Mechanismus nach der Erfindung bei abgenommen Grundkörperdeckel und mit herausgezeichneter Detailansicht von Arretierrad und Arretierbacke, und
- Fig. 2: eine Untersicht des Mobiltelefon/PDA-Halters mit aufgesetztem Grundkörperdeckel.

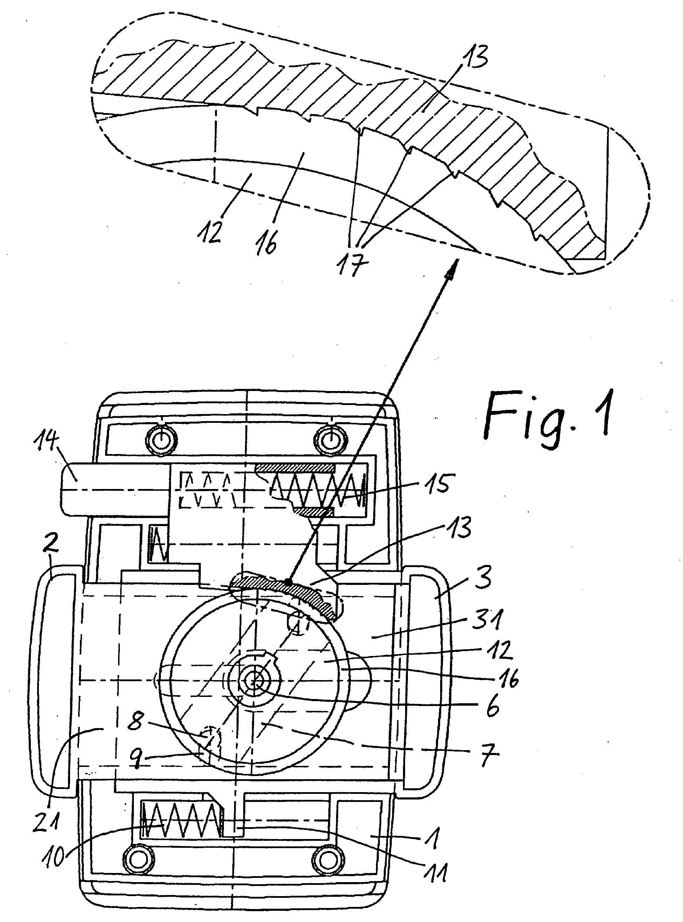

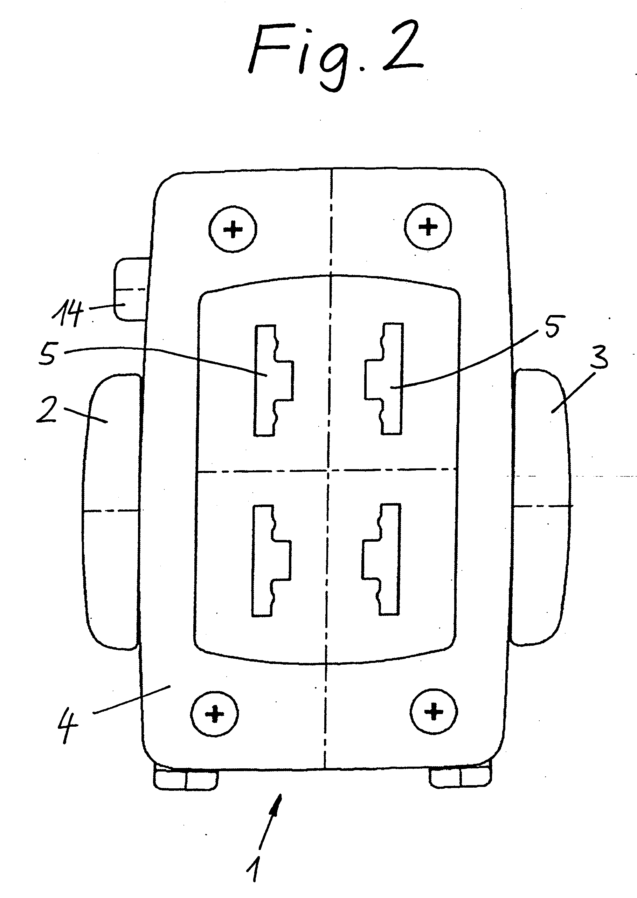

Die Zeichnungen zeigen einen Mobiltelefon/PDA-Halter in Untersicht mit augeschraubten Grundkörperdeckel (Fig. 2) bzw. bei abgenommenen Grundkörperdeckel (Fig. 1), wobei der Mechanimus für die beweglichen Klemmbacken sichtbar ist.

Der Mobiltelefon/PDA-Halter selbst hat die allgemein bekannte Grundform, wie sie aus den eingangs erwähnten Patenten DE 195 42 720 C1 und US 5 788 202 beispielsweise bekannt ist, nämlich mit einem Grundkörper 1, auf den das betreffende Gerät aufzulegen ist, und zwei an dessen beiden Seiten angeordneten Klemmbacken 2, 3, die synchron und gleichmäßig voneinander weg und zueinander zu bewegbar sind, was durch einen im Inneren des hohlkastenförmig aufgebauten Grundkörpers 1 angeordneten Mechanismus bewerkstelligt wird. Damit der Innenraum des Grundkörpers 1 zugänglich ist, ist er mit einem seine Rückwand bildenden aufgeschraubten und daher abnehmbaren Deckel 4 versehen, wie in Figur 2 dargestellt. Der Deckel 4 weist auch eine Anordnung von Öffnungen 5 auf, die mit entsprechenden hakenförmigen Nasen an der Kopfplatte eines Geräteträgers oder eines Tragarms eines Schnellkupplung zum lösbaren Anbringen des Halters bilden.

Der grundsätzliche Aufbau des den beiden Klemmbacken 2 und 3 zugeordneten Mechanismus im Inneren des Grundkörpers 1 ist bekannt, nämlich wiederum aus den Patenten DE 195 42 720 C1 sowie US 5 788 202, und wird daher nicht im einzelnen beschrieben. Vielmehr wird auf die beiden genannten Patente Bezug genommen.

Dieser Mechanismus besteht, kurz zusammengefasst, aus den an den beiden Klemmbacken 2 und 3 jeweils angeordneten, in den Grundkörper 1 eintauchenden Führungsschenkeln 21, 31 und der diese für eine synchrone Bewegung kuppelnden Kuppelmechanik in Gestalt eines um eine zur Ebene der Führungsschenkel senkrechte Achse 6 drehbaren Elements 7 mit zwei diametral gegenüberliegend angeordneten Zapfen 8 (oder Öffnungen), die mit jeweils einer entsprechenden Öffnung 9 (oder einem entsprechenden Zapfen) der Klemmbackenführungsschenkel 21, 31 in Kupplungseingriff stehen. Dadurch sind die beiden Klemmbacken 2 und 3 so miteinander gekuppelt, daß sie jeweils synchron und gleichmäßig voneinander weg oder aufeinander zu bewegbar sind. Zwei im Grundkörper 1 angeordnete Druckfedern 10 sind jeweils einerseits am Grundkörper abgestützt wrken und andererseits auf einen Mitnehmer 11 am jeweiligen Führungsschenkel 21 bzw. 31 der Klemmbacken 2 und 3 und spannen diese in ihre Öffnungsrichtung vor.

Mit dem drehbaren Element 7 der Kuppelmechanik drehfest verbunden ist ein Arretierrad 12 , mit dem eine Arretierbacke 13 zusammenwirkt. Die Arretierbacke 13 ist mit einem als Auslösetaster 14 ausgebildeten Schieber verbunden, der mittels einer Druckfeder 15 die Arretierbacke 13 in Richtung des Eingriffs mit dem Umfang des Arretierrads 12 vorspannt. Das Arretierrad trägt an seinem Umfang eine ringförmige Gummischicht 16. Das Arretierrad kann auch auf ein Radsegement reduziert sein, das einen dem funktionsnotwendigen Drehwinkel entsprechenden Bogen überspannt.

In Figur 1 ist der mit dem Umfang des Arretierrads 12 in Eingriff stehende Bereich der Arretierbacke 13 als vergrößerte Einzelheit herausgezeichnet. Hieraus ist ersichtlich, daß die Arretierbacke 13 über einen gewissen Umfangsbogenabschnitt mit dem Arretierrad 12 zusammenwirkt und mit einer Anzahl kleiner asymmetrischer beabstandeter Zähne 17 ausgebildet ist, die sich in den Umfang der Gummischicht 16 des Arretierrads 12 eindrücken. Diese Zähne haben ein flaches Sägezahnprofil und wirken somit nach Art von Widerhaken. Sie sperren somit eine Drehung des Arretierrads 12 in Figur 1 im Gegenurzeigersinn, lassen jedoch eine Drehung des Arretierrads 12 im Urzeigersinn zu, in dem dann die Gummischicht 16 jeweils unter den Zähnen 17 hinweggleitet.

Wird die aus dem Grundkörper 1 herausragende Auslösetaste 14 entgegen der Kraft der Feder gedrückt, hebt die Arretierbacke 13 vom Arretrierrad 12 ab, so daß dieses frei (im Uhrzeigersinn) drehbar ist, so daß die Federn 10 die Klemmbacken 2 und 3 in ihre vollständig geöffnete Stellung bewegen. Nach dem Einlegen des jeweiligen Geräts werden die beiden Klemmbacken 2 und 3 gegeneinander gedrückt, um sie in Anlage mit den Seitenflächen des Geräts zu bringen. Dabei dreht sich das Arretierrad 12 in Figur 1 im Uhrzeigersinn und gleitet mit seiner Gummischicht 16 über die Zähne 17 hinweg, bis die Anlageposition der Klemmbacken 2 und 3 an dem Gerät erreicht ist. In dieser Position arretiert die Klemmbacke 13 mit den sich in die Gummischicht 16 eindrückenden Zähnen 17 das Arretierrad 12 gegen eine Drehung im Gegenuhrzeigersinn, so daß die Klemmbacken sich nicht in Öffnungsrichtung bewegen können.

Es versteht sich, daß mindestens ein Zahn 17 vorhanden sein muß, jedoch ist eine Mehrzahl kleiner Zähne vorteilhaft, damit eine ausreichende Arretierkraft ohne Beschädigung der Gummischicht 16 und bei relativ geringem Widerstand gegen ein Drehen des Arretierrads 12 in "Durchlassrichtung" also gegen die Sperrrichtung der Zähne 17 erreicht wird. Es versteht sich weiter daß statt einer Gummischicht 16 auch eine andere geeignete, hinreichend weichelastische Umfangsschicht des Arretierrads 12 aus jedem geeigneten Material vorgesehen sein kann.

## Patentansprüche

1. Klemmbackenmechanismus für Mobiltelefon/PDA-Halter mit einem als Hohlkasten ausgebildeten Grundkörper zum Auflegen des Mobiltelefons/PDA-Geräts oder dergleichen und zwei beiderseits angeordneten Klemmbacken (2, 3), die synchron und gleichmäßig voneinander weg bzw. aufeinander zu verschiebbar sind, wobei der im Grundkörper (1) angeordnete Mechanismus aufweist:
jeweils einen an jeder der Klemmbacken (2, 3) angeordneten, in den Grundkörper (1) eintauchenden Führungsschenkel (21, 22), ein um eine Achse (6) drehbares Kuppelelement (7), das an diametral gegenüberliegenden Stellen über jeweils eine Zapfen-Schlitz-Verbindung oder dergleichen mit jeweils einem der Führungsschenkel (21, 31) gekuppelt ist,
eine Druckfederanordnung, welche die Klemmbacken (2, 3) in Öffnungsrichtung vorspannen,
und ein drehfest mit dem drehbaren Kuppelelement (7) verbundenes Arretierrad (12), mit dem ein federnd in Eingriff vorgespanntes (15) Arretierelement (13) zusammenwirkt, das mittels einer Auslösetaste (14) außer Eingriff mit dem Arretierrad (12) bringbar ist, wobei das Arretierelement (13) eine Drehung des Arretierrads (12) in einem Drehsinn entsprechend der Schließbewegungsrichtung der Klemmbacken zulässt und eine Drehbewegung des Arretierrads (12) im entgegengesetzten Drehsinn sperrt,
**dadurch gekennzeichnet, daß** das Arretierrad (12) eine relativ weiche, elastisch verformbare Umfangsfläche (16) aufweist und das Arretierelement (13) als mit einem Umfangsbereich des Arretierrads (12) zusammenwirkende Arretierbacke mit einer Anzahl kleiner widerhakenartig ausgebildeter Zähne (17) ausgebildet ist, die sich beim Zusammenwirken der Arretierbacke (13) mit dem Arretierrad (12) in dessen weiche Umfangsfläche (16) eindrücken.

2. Mechanismus nach Anspruch 1, wobei das Arretierrad (12) eine ringförmige Umfangsschicht (16) aus Gummi, Kunststoff oder dergleichen aufweist.

3. Mechanismus nach Anspruch 1 oder 2, wobei eine Mehrzahl von in Umfangsrichtung beabstandeter Zähne (17) an der Arretierbacke (13) vorgesehen ist, die jeweils ein flaches Sägezahnprofil haben.

## Claims

1. Clamping jaw mechanism for a mobile phone/PDA holder comprising a basic body in the form of a hollow box for depositing the mobile phone/PDA appliance or the like and two clamping jaws (2, 3) disposed on either side, which are displaceable synchronously and uniformly away from and/or towards one another, wherein the mechanism disposed in the basic body (1) comprises:
one guide limb (21, 22) disposed on each of the clamping jaws (2, 3) and engaging into the basic body (1), a coupling element (7) that is rotatable about an axis (6) and that is coupled at diametrically opposite points in each case by a pin-and-slot connection or the like to a respective one of the guide limbs (21, 31),
a compression spring arrangement biasing the clamping jaws (2, 3) in opening direction,
and a locking wheel (12), which is connected in a rotationally fixed manner to the rotatable coupling element (7) and interacting with which is a locking element (13), which is spring-biased (15) into an engaged state and may be brought out of engagement with the locking wheel (12) by means of a release button (14), wherein the locking element (13) allows a rotation of the locking wheel (12) in a direction of rotation corresponding to the direction of the closing movement of the clamping jaws and blocks a rotational movement of the locking wheel (12) in the opposite direction of rotation,
**characterized in that** the locking wheel (12) has a relatively soft, elastically deformable circumferential surface (16) and the locking element (13) is designed as a locking jaw, which interacts with a circumferential region of the locking wheel (12) and has a number of small teeth (17) of a barb-like design, which during the interaction of the locking jaw (13) with the locking wheel (12) press into the soft circumferential surface (16) of the locking wheel (12).

2. Mechanism according to claim 1, wherein the locking wheel (12) comprises an annular circumferential layer (16) of rubber, plastics material or the like.

3. Mechanism according to claim 1 or 2, wherein a plurality of teeth (17) spaced in circumferential direction are provided on the locking jaw (13) and each have a shallow saw-tooth profile.

## Revendications

1. Mécanisme à mâchoires de serrage pour support de téléphone mobile/ANP, comportant un corps de base réalisé sous la forme d'un caisson creux et destiné à poser dessus le téléphone mobile/appareil ANP ou analogue et deux mâchoires de serrage (2, 3) disposées chacune d'un côté qui sont mobiles de manière synchrone et régulière pour s'éloigner l'une de l'autre ou se rapprocher l'une de l'autre, le mécanisme disposé dans le corps de base (1) présentant :
une branche de guidage (21, 22) disposée sur chacune des mâchoires de serrage (2, 3), s'enfonçant dans le corps de base (1), un élément d'accouplement (7) pouvant tourner autour d'un axe (6) et accouplé à chacune des branches de guidage (21, 31) en des points diamétralement opposés par l'intermédiaire d'un assemblage à tenon et mortaise respectif ou analogue,
un agencement de ressorts de pression qui assure une précontrainte des mâchoires de serrage (2, 3) dans la direction d'ouverture,
et une roue d'arrêt (12) reliée de manière solidaire en rotation à l'élément d'accouplement (7) pouvant tourner, avec laquelle coopère un élément d'arrêt (13) maintenu en prise de manière élastique par précontrainte (15), qui peut être sorti de sa prise avec la roue d'arrêt (12) au moyen d'une touche de déclenchement (14), l'élément d'arrêt (13) autorisant une rotation de la roue d'arrêt (12) dans un sens de rotation correspondant à la direction du mouvement de fermeture des mâchoires de serrage et bloquant un mouvement de rotation de la roue d'arrêt (12) dans le sens de rotation opposé,
**caractérisé en ce que** la roue d'arrêt (12) présente une surface circonférentielle (16) relativement souple, déformable élastiquement et l'élément d'arrêt (13) est réalisé sous la forme de mâchoire d'arrêt coopérant avec une zone circonférentielle de la roue d'arrêt (12), comportant un nombre de petites dents (17) réalisées en forme d'ardillons, qui s'enfoncent, lors de la coopération de la mâchoire d'arrêt (13) avec la roue d'arrêt (12), dans la surface circonférentielle (16) souple de celle-ci.

2. Mécanisme selon la revendication 1, dans lequel la roue d'arrêt (12) présente une couche circonférentielle (16) annulaire en caoutchouc, en matière plastique ou similaire.

3. Mécanisme selon la revendication 1 ou 2, dans lequel il est prévu sur la mâchoire d'arrêt (13) une pluralité de dents (17) espacées dans la direction circonférentielle qui ont chacune un profil en dent de scie plat.
